# EUROPÄISCHE PATENTANMELDUNG

(11) **EP 1 554 928 A1**
(43) Veröffentlichungstag der Anmeldung: **20.07.2005**
(21) Anmeldenummer: 05000658.4
(22) Anmeldetag: 14.01.2005
(51) Int. Cl.: A01K 5/02, A01K 7/02

(54) **Vorrichtung zum Tränken von Nutztieren bei gleichzeitiger Zuführbarkeit von Hilfsstoffen**

(30) Priorität: 17.01.2004 DE 102004002498
(71) Anmelder: Ganseforth, Heinrich, 26892 Heede (DE)
(72) Erfinder: Ganseforth, Heinrich, 26892 Heede (DE)
(74) Vertreter: Jabbusch, Matthias, Dipl.-Ing.

(57) **Zusammenfassung**

Bei einer Vorrichtung zum Tränken von Nutztieren bei gleichzeitiger Zuführbarkeit von Hilfsstoffen, wie Verdauungshilfen und/oder Medikamenten, zu den Nutztieren, umfassend ein Leitungssystem für Tränkflüssigkeiten und umfassend wenigstens eine das Leitungssystem beaufschlagende Pumpe (4), ist vorgesehen, daß das Leitungssystem in wenigstens einem von der Pumpe entfernten Abschnitt flüssigkeits- und gasdicht abgeschlossen ist, daß in dem Leitungssystem wenigstens ein Gasvolumen (6) angeordnet ist und daß die Pumpe als eine bei Vorliegen eines wahlweise definierten Innendrucks im Leitungssystem selbsttätig stehenbleibende und bei Abfallen des tatsächlichen Innendrucks unter diesen definierten Innendruck selbsttätig anlaufende Pumpe ausgebildet ist.

Mit dieser Vorrichtung ist ein Zuführen von Hilfsstoffen mit der Tränkflüssigkeit ohne das Auftreten von Verstopfungen der die Tränkflüssigkeit führenden Leitungen ermöglicht.

## Beschreibung

Die Erfindung betrifft eine Vorrichtung zum Tränken von Nutztieren bei gleichzeitiger Zuführbarkeit von Hilfsstoffen, wie Verdauungshilfen und/oder Medikamenten, zu den Nutztieren, umfassend ein Leitungssystem für Tränkflüssigkeiten und umfassend wenigstens eine das Leitungssystem beaufschlagende Pumpe.

Nutztieren sind neben festen Futterstoffen Tränkflüssigkeiten, wie z. B. Wasser, zuzuführen. In industriellen Viehzuchtbetrieben werden zum Zuführen von Tränkflüssigkeiten Leitungssysteme eingesetzt, welche über große Strecken durch Ställe führen können. Ein derartiges Leitungssystem weist beispielsweise eine über eine gesamte Länge eines Stalls geführte Flüssigkeitsleitung auf, in deren Längsverlauf mehrere Dutzend Entnahmeöffnungen für die Tiere angeordnet sind. Diese Entnahmeöffnungen sind regelmäßig mit Ventilen versehen, so daß ein Tier bei Bedarf das Ventil öffnen kann und Tränkflüssigkeit entnehmen kann. Ist das Saufen abgeschlossen, verschließt das Ventil diese Entnahmeöffnung wieder.

In den letzten Jahren wurde die Fütterung von jungen Nutztieren dahingehend umgestellt, daß weniger tierische Ausgangsstoffe verfüttert werden. Die pflanzliche Fütterung hat zugenommen, wobei dadurch neue Probleme aufgetreten sind. Aufgrund der pflanzlichen Fütterung treten bei jungen Tieren nämlich Verdauungsprobleme auf, da sich durch das pflanzliche Futter Kolikeime stark vermehren. Das Verdauungssystem der jungen Tiere ist jedoch an tierische Nahrung angepaßt, bei einer Umstellung auf pflanzliche Nahrung in kurzer Zeit kommt es zu der Vermehrung der Kolikeime.

Um diese Verdauungsprobleme zu lösen, wurde im Stand der Technik bereits vorgeschlagen, der Tränkflüssigkeit Säure beizumischen. Diese Säure wird als Hilfsstoff der Tränkflüssigkeit beigemischt, um Kolikeime zu bekämpfen. Der Tränkflüssigkeit können auch andere Hilfsstoffe beigemischt werden, so beispielsweise zugelassene Medikamente oder ätherische Öle.

Bei den verschiedenen Hilfsstoffen und insbesondere bei der Säure besteht jedoch das Problem, daß diese Hilfsstoffe eine hohe Affinität aufweisen und zäh sind. Insbesondere die zugeführte Säure kann sich nicht für längere Zeit gleichmäßig in der Tränkflüssigkeit verteilen, sondem sie entmischt sich wieder aus der Flüssigkeit. Aufgrund dieses Entmischens besteht das Problem, daß die Säure insbesondere auf einer längeren Flüssigkeitsleitung Abschnitte dieser Leitung, insbesondere Ventile und Engstellen, zusetzen kann.

Der Erfindung liegt die Aufgabe zugrunde, eine Vorrichtung der eingangs genannten Gattung aufzuzeigen, mit der ein Zuführen von Hilfsstoffen mit der Tränkflüssigkeit ohne das Auftreten von Verstopfungen der die Tränkflüssigkeit führenden Leitungen ermöglicht ist.

Diese Aufgabe ist erfindungsgemäß dadurch gelöst, daß das Leitungssystem in wenigstens einem von der Pumpe entfernten Abschnitt flüssigkeits- und gasdicht abgeschlossen ist, daß in dem Leitungssystem wenigstens ein Gasvolumen angeordnet ist und daß die Pumpe eine bei Vorliegen eines wahlweise definierten Innendrucks im Leitungssystem selbsttätig stehenbleibende und bei Abfallen des tatsächlichen Innendrucks unter diesen definierten Innendruck selbsttätig anlaufende Pumpe ausgebildet ist.

Auch bei der erfindungsgemäßen Vorrichtung werden die Hilfsstoffe mit der Tränkflüssigkeit durch das Leitungssystem den Nutztieren zugeführt. Für das Einführen der Tränkflüssigkeit in das Leitungssystem ist wenigstens eine Pumpe vorgesehen, mit der die Tränkflüssigkeit und die mit ihr transportierten Hilfsstoffe in dem Leitungssystem transportiert werden. Die Pumpe ist dabei in der Weise ausgebildet, daß sie ständig in Betrieb ist. Sie fördert Tränkflüssigkeit bis zu einem bestimmten Innendruck in das Leitungssystem hinein. Erst wenn dieser Innendruck erreicht ist, stellt die Pumpe selbsttätig das Fördern ein.

Daß sich im Leitungssystem ein Innendruck aufbauen kann, ist dadurch erreicht, daß das Leitungssystem flüssigkeitsdicht abgeschlossen ist. Durch die Pumpe wird somit bei fortdauernder Förderung die im Leitungssystem enthaltene Tränkflüssigkeit komprimiert, bis sich der definierte Innendruck einstellt, bei dem die Pumpe das Fördern einstellt.

Erfindungsgemäß ist vorgesehen, daß im Leitungssystem wenigstens ein Gasvolumen angeordnet ist. Bei einem Komprimieren der Tränkflüssigkeit wird zugleich das Gasvolumen komprimiert. Da Gase leichter zu komprimieren sind als Flüssigkeiten, tritt die Komprimierung beim Gasvolumen stärker ein.

Wird aus dem mit diesem Innendruck versehenen Leitungssystem durch ein Nutztier Flüssigkeit entnommen, so verringert sich der Innendruck in dem Leitungssystem. Dadurch kann sich das komprimierte Gas ausdehnen. Durch diese Ausdehnung wird eine Bewegung der Flüssigkeit hervorgerufen. Führt die Entnahme von Tränkflüssigkeit dazu, daß der Innendruck im Leitungssystem bis unter den definierten Innendruck sinkt, so nimmt die Pumpe das Fördern von neuer Tränkflüssigkeit in das Leitungssystem hinein auf. Dadurch erfolgt wieder ein Bewegen der bereits im Leitungssystem vorhandenen Flüssigkeit, während das Gasvolumen erneut komprimiert wird.

Sowohl bei einer Ausdehnung des Gasvolumens als auch bei einer Komprimierung des Gasvolumens treten in der Tränkflüssigkeit Bewegungen auf. Diese Bewegungen führen zu einem Schütteln der Flüssigkeit, wobei dieses Schütteln verhindert, daß sich in der Flüssigkeit transportierte Hilfsstoffe aus der Flüssigkeit entmischen können. Bei einem langen Leitungsabschnitt über beispielsweise 30 m können fünfzig Entnahmeöffnungen für die Tiere angeordnet sein. Fortlaufend wird aus diesen Entnahmeöffnungen Flüssigkeit entnommen, beispielsweise alle 3 Sekunden.

Das Ausdehnen des Luftvolumens mit Auslösen der einen Bewegung der Flüssigkeit und das Fördern von neuer Tränkflüssigkeit in das System, verursachend die andere Bewegung der Tränkflüssigkeit, wechseln in kurzen Abständen fortlaufend einander ab, so daß die in dem Leitungssystem enthaltene Flüssigkeit nicht zur Ruhe kommt. Das Leitungssystem weist dabei insbesondere im Abschnitt zwischen Pumpe und Abschluß eine Vielzahl von Entnahmeöffnungen für die Tränkflüssigkeit auf.

Nach einer nächsten Weiterbildung der Erfindung ist vorgesehen, daß das Gasvolumen unmittelbar vor dem Abschluß des Leitungssystems angeordnet ist. Dadurch wird vorteilhaft erreicht, daß möglichst alle Entnahmeöffnungen in dem Abschnitt zwischen Pumpe und Gasvolumen angeordnet sind. Wird an einer Entnahmeöffnung Tränkflüssigkeit entnommen, so führt eine Ausdehnung des Gasvolumens zu einer Bewegung der Flüssigkeit zwischen dem Gasvolumen und dieser Entnahmeöffnung. Fördert die Pumpe anschließend neue Tränkflüssigkeit nach und wird das Gasvolumen wieder komprimiert, so wird die Flüssigkeit auf der gesamten Strecke zwischen Pumpe und Gasvolumen bewegt.

Das Gasvolumen ist vorzugsweise ein Luftvolumen. Als definierter Innendruck kann ein Druck von 0.5 bis 3 bar vorgesehen sein, in Abhängigkeit von der Länge des Leitungssystems, der Durchmesser der einzelnen Leitungen und der zugeführten Tränkflüssigkeit.

Das Gasvolumen hat beispielsweise die dreifache Größe eines mit der Pumpe in einem Arbeitstakt geförderten Tränkflüssigkeitsvolumens. Diese Einstellung hat sich als vorteilhaft erwiesen, um eine ein Entmischen von Hilfsstoffen verhindernde Bewegung der Tränkflüssigkeit zu erreichen.

Die Pumpe ist vorzugsweise einem Eingangsabschnitt des Leitungssystems zugeordnet, so daß zwischen den Gasvolumen und der Pumpe sämtliche Entnahmeöffnungen des Leitungssystems angeordnet sind. Das Leitungssystem ist beispielsweise als eine Leitung ausgebildet, an deren Beginn die Pumpe angeordnet ist und an deren Ende ein flüssigkeitsdichter Verschluß mit einem davor befindlichen Gasvolumen angeordnet ist. Das Leitungssystem kann aber auch Verzweigungen oder Ringleitungen aufweisen, gegebenenfalls sind mehrere Pumpen und/oder mehrere Abschlüsse mit Gasvolumina vorgesehen.

Eine nächste Weiterbildung der Erfindung sieht vor, daß die Pumpe eine Kolbenmembranpumpe ist. Mit einer Kolbenmembranpumpe kann eine Flüssigkeit bis zu einem bestimmten Innendruck in ein System hineingefördert werden. Wird dieser Druck erreicht, bleibt die Pumpe selbsttätig stehen, ohne daß ein Abschalten erforderlich ist. Die Pumpe kann daher einfach ausgebildet sein. Sinkt der Druck wieder, so reicht die eingestellte Kraft der Pumpe für einen selbsttätigen Anlauf der Pumpe aus und die Förderung wird wieder aufgenommen. Vorzugsweise wird eine Kolbenmembranpumpe eingesetzt, die mit Druckluft angetrieben ist. Druckluft ist in Nutztierställen regelmäßig vorhanden.

Nach einer nächsten Weiterbildung der Erfindung ist die erfindungsgemäße Vorrichtung um eine Mischeinrichtung ergänzt. Dazu sieht die Weiterbildung vor, daß in Fließrichtung der Tränkflüssigkeiten unmittelbar vor der Pumpe ein Mischbehältnis für Tränkflüssigkeiten angeordnet ist. Eine Tränkflüssigkeit und die Hilfsstoffe werden somit erst unmittelbar vor Einführen in das Leitungssystem miteinander vermischt.

In das Mischbehältnis mündet vorzugsweise wenigstens eine Zuleitung für einen Hilfsstoff ein, wobei diese Leitung über eine Pumpe mit einem Zählwerk geführt ist. Auch diese Pumpe kann als Kolbenmembranpumpe ausgebildet sein. Mit der Kolbenmembranpumpe mit einem Zählwerk kann das Volumen des zugeführten Hilfsstoffes exakt bestimmt werden.

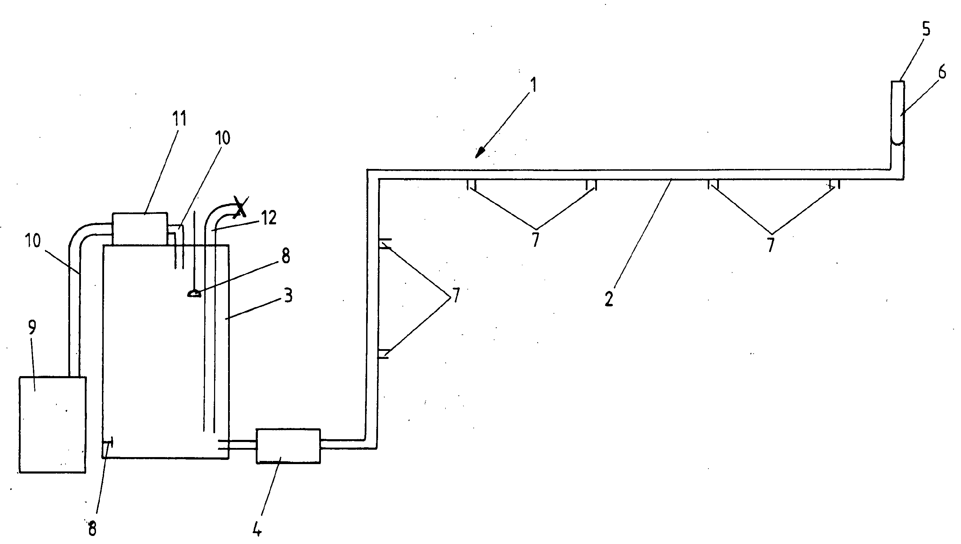

Ein Ausführungsbeispiel der Erfindung, aus dem sich weitere erfinderische Merkmale ergeben, ist in der Zeichnung dargestellt. Die einzige Figur der Zeichnung zeigt in schematischer Weise eine erfindungsgemäße Vorrichtung zum Tränken von Nutztieren.

Die Vorrichtung zum Tränken von Nutztieren weist ein Leitungssystem 1 auf, das im Wesentlichen von einer Flüssigkeitsleitung 2 ausgebildet ist. Diese Leitung 2 ist aus einem Mischbehältnis 3 herausgeführt.

Die Tränkflüssigkeit wird aus dem Mischbehältnis 3 hinaus in die Leitung 2 eingeführt. Diesem Einführen dient eine erste Pumpe 4, die unmittelbar im Anschluß an das Mischbehältnis 3 in den Verlauf der Leitung 2 eingesetzt ist. Diese Pumpe 4 ist eine Kolbenmembranpumpe.

Am entgegengesetzten Ende der Leitung 2 ist ein Abschluß 5 der Leitung 2 vorgesehen. Dieser Abschluß 5 ist flüssigkeits- und gasdicht. Unmittelbar vor diesem Abschluß 5 ist in der Leitung 2 ein Gasvolumen 6 angeordnet. Im Verlauf der Leitung 2 weist diese mehrere Entnahmeöffnungen 7 auf.

In dem Mischbehältnis 3 wird eine Tränkflüssigkeit mit wenigstens einem Hilfsstoff gemischt. Die Tränkflüssigkeit, z. B. Wasser, wird dabei über eine Leitung 12 in das Mischbehältnis 3 eingeführt. In diesem Mischbehältnis 3 sind Flüssigkeitsfühler 8 zum Ermitteln des Minimal- und Maximalflüssigkeitsstandes angeordnet. Ein der Tränkflüssigkeit zuzuführender Hilfsstoff wird aus einem separaten Behälter 9 entnommen und über eine Hilfsstoffleitung 10 in das Mischbehältnis 3 eingeführt. Die Hilfsstoffleitung 10 ist dabei über eine zweite Pumpe 11 geführt, die als Kolbenmembranpumpe mit einem Zählwerk ausgebildet ist.

## Patentansprüche

1. Vorrichtung zum Tränken von Nutztieren bei gleichzeitiger Zuführbarkeit von Hilfsstoffen, wie Verdauungshilfen und/oder Medikamenten, zu den Nutztieren, umfassend ein Leitungssystem für Tränkflüssigkeiten und umfassend wenigstens eine das Leitungssystem beaufschlagende Pumpe,
**dadurch gekennzeichnet,**
**daß** das Leitungssystem (1) in wenigstens einem von der Pumpe (4) entfernten Abschnitt flüssigkeits- und gasdicht abgeschlossen ist, daß in dem Leitungssystem (1) wenigstens ein Gasvolumen (6) angeordnet ist und daß die Pumpe (4) als eine bei Vorliegen eines wahlweise definierten Innendrucks im Leitungssystem (1) selbsttätig stehenbleibende und bei Abfallen des tatsächlichen Innendrucks unter diesen definierten Innendruck selbsttätig anlaufende Pumpe (4) ausgebildet ist.

2. Vorrichtung nach Anspruch 1, **dadurch gekennzeichnet, daß** das Leitungssystem (1) im Abschnitt zwischen Pumpe (4) und Abschluß (5) eine Vielzahl von Entnahmeöffnungen (7) für eine Tränkflüssigkeit aufweist.

3. Vorrichtung nach Anspruch 1 oder 2, **dadurch gekennzeichnet, daß** der definierte Innendruck 0,5 bis 3 bar beträgt.

4. Vorrichtung nach einem der Ansprüche 1 bis 3, **dadurch gekennzeichnet, daß** das Gasvolumen (6) unmittelbar vor dem Abschluß (5) des Leitungssystems (1) angeordnet ist.

5. Vorrichtung nach einem der vorhergehenden Ansprüche, **dadurch gekennzeichnet, daß** das Gasvolumen (6) ein Luftvolumen ist.

6. Vorrichtung nach einem der vorhergehenden Ansprüche, **dadurch gekennzeichnet, daß** das Gasvolumen (6) etwa die dreifache Größe des mit der Pumpe (4) in einem Arbeitstakt geförderten Tränkflüssigkeitsvolumens hat.

7. Vorrichtung nach einem der vorhergehenden Ansprüche, **dadurch gekennzeichnet, daß** die Pumpe (4) einem Eingangsabschnitt des Leitungssystems (1) zugeordnet ist.

8. Vorrichtung nach einem der vorhergehenden Ansprüche, **dadurch gekennzeichnet, daß** die Pumpe (4) eine Kolbenmembranpumpe ist.

9. Vorrichtung nach Anspruch 8, **dadurch gekennzeichnet, daß** die Kolbenmembranpumpe mit Druckluft angetrieben ist.

10. Vorrichtung nach einem der vorhergehenden Ansprüche, **dadurch gekennzeichnet, daß** in Fließrichtung der Tränkflüssigkeiten unmittelbar vor der Pumpe (4) ein Mischbehältnis (3) für die Tränkflüssigkeiten angeordnet ist.

11. Vorrichtung nach Anspruch 10, **dadurch gekennzeichnet, daß** in das Mischbehältnis (3) wenigstens eine Zuleitung (10) für einen Hilfsstoff einmündet, wobei diese Leitung (10) über eine Pumpe (11) mit einem Zählwerk geführt ist.

12. Vorrichtung nach Anspruch 11, **dadurch gekennzeichnet, daß** die Pumpe (11) mit dem Zählwerk eine Kolbenmembranpumpe ist.
